Europäisches Patentamt

European Patent Office

Office européen des brevets

(19)

(11) Veröffentlichungsnummer: **0 237 920**
**B1**

(12)   EUROPÄISCHE PATENTSCHRIFT

(45) Veröffentlichungstag der Patentschrift:
12.09.90

(51) Int. Cl.⁵: **F02B 75/22,** F02M 35/10,
F02B 27/00

(21) Anmeldenummer: 87103397.3

(22) Anmeldetag: 10.03.87

(54) Hubkolben-Brennkraftmaschine mit zwei einander gegenüber angeordneten Zylinder-Reihen, insbesondere in V-Anordnung.

(30) Priorität: 17.03.86 DE 3608913

(43) Veröffentlichungstag der Anmeldung:
23.09.87 Patentblatt 87/39

(45) Bekanntmachung des Hinweises auf die Patenterteilung:
12.09.90 Patentblatt 90/37

(84) Benannte Vertragsstaaten:
DE ES FR GB IT SE

(56) Entgegenhaltungen:
EP-A- 0 155 685
EP-A- 0 187 263
US-A- 2 759 462
US-A- 2 915 049
US-A- 2 927 564

(73) Patentinhaber: Bayerische Motoren Werke
Aktiengesellschaft, Patentabteilung
AJ-30 Postfach 40 02 40 Petuelring 130,
D-8000 München 40(DE)

(72) Erfinder: Seidl, Jiri, Strassbergerstrasse 14,
D-8000 München 40(DE)

(74) Vertreter: Bücken, Helmut, Bayerische Motoren Werke
Aktiengesellschaft Postfach 40 02 40 Petuelring 130 -
AJ-30, D-8000 München 40(DE)

ACTORUM AG

## Beschreibung

Die Erfindung geht gemäß dem Oberbegriff des unabhängigen Patentanspruches von der US-PS 2 969 786 aus.

Bei dieser bekannten Bauart sind die Zylinderköpfe der beiden V-förmig angeordneten Zylinder-Reihen durch zusätzliche Wände und angeformte Teile von Saugleitungen zu einem einzigen Bauteil vereint. In einem weiteren einstückigen Bauteil sind Steuergehäuse sowie die restlichen Teile der Saugleitungen mit dem Sammler ausgebildet. Weiter ist diese bekannte Brennkraftmaschine mit einem das die Zylinder-Reihen tragenden Kurbelgehäuse-Oberteil aussteifenden Kurbelgehäuse-Unterteil ausgerüstet. Dieser bekannte V-Motor ist damit sowohl kurbelgehäuseseitig als auch zylinderkopfseitig durch Querverbindungen aus maschinenfunktionellen Teilen ausgesteift. Dieses Prinzip ist für eine aus Gründen des Leichtbaues dünnwandig gestaltete Brennkraftmaschine mit V-förmig angeordneten Zylinder-Reihen zwar vorteilhaft, jedoch ergibt sich für ein aus zwei Zylinderköpfen und einem Teil der Sauganlage gebildetes Bauteil ein komplizierter Aufbau.

Weiter ist aus der DE-PS 331 450 ein V-Motor bekannt, bei dem das Kurbelgehäuse-Oberteil mit einem halbschalenartigen, relativ dickwandigen Kurbelgehäuse-Unterteil in Verbindung steht, der jedoch als Ölsammelraum dient. Ferner sind die V-förmig angeordneten Zylinder durch eine geradlinige, relativ steife Gaswechselleitung miteinander verbunden. Dadurch kann es bei unterschiedlichem Wärmeanfall in den schräg zueinander angeordneten Zylindern zu Verformungen der Zylinderköpfe mit Klemmen der Ventilführungen und Undichtigkeiten an den Ventilsitzen kommen.

Schließlich ist aus der GB-PS 1 534 790 eine Brennkraftmaschine mit V-förmig angeordneten Zylinder-Reihen bekannt, die gesonderte Zylinderköpfe tragen. Diese stehen mit einer gesonderten, in Stirnansicht der Brennkraftmaschine dachförmig gestalteten Sauganlage in Verbindung. Die Sauganlage ist aus zwei Bauteilen gebildet, wobei der Sammler und die angeschlossenen Saugleitungen von einer Seite her in dem einen Bauteil ausgebildet sind und mittels des anderen, im wesentlichen flächigen Bauteiles dauerhaft abgedeckt sind. Das flächige Bauteil deckt den V-Winkelraum der Maschine nicht nur außerhalb der Sauganlage ab, sondern auch zwischen den einzelnen Saugleitungen. Da die Saugleitungen weiter an den Zylinderköpfen rechtwinkelig anschließen, ergibt sich aus dem gegenseitigen Versatz gegenüberliegender Zylinder der beiden Zylinder-Reihen in Längsrichtung der Maschine eine unterschiedliche Über-Eck-Steifigkeit der Sauganlage.

Diese bekannte Sauganlage ist daher für eine gleichmäßige Aussteifung bei wechselnder Torsionsbeanspruchung eines V-Motors nicht vorteilhaft. Sie hat den weiteren Nachteil relativ kurzer Saugleitungen, die im unteren Lastbereich der Brennkraftmaschine ein mäßiges Drehmoment bzw. einen ungünstigen Drehmoment-Verlauf ergeben.

Der Erfindung liegt die Aufgabe zugrunde, für eine Brennkraftmaschine der eingangs beschriebenen Bauart eine Sauganlage auszubilden, die bei einer für die Wärmedehnung der Brennkraftmaschine ausreichenden Elastizität eine gegen Längsbiegung und Torsions-Belastungen wirksame Verbindung der einander gegenüber angeordneten Zylinder-Reihen ergibt, wobei die Längen der Saugleitungen im Hinblick auf Schwingrohre relativ frei wählbar sind.

Gelöst wird diese Aufgabe mit den im Kennzeichen des unabhängigen Patentanspruches angegebenen Merkmalen. Der Vorteil der Erfindung ist darin zu sehen, daß mit der U-bogenförmigen Kontur der Sauganlage in Verbindung mit relativ lang gewählten Saugleitungen der V-Winkelraum zwischen den zylinderkopfseitigen Anschlüssen der Sauganlage und zwischen den Enden der Brennkraftmaschine eng mit Saugleitungen überdeckbar ist, wobei eine großflächige Überdeckung mit Saugleitungen durch einen langgestreckten Sammler vorteilhaft unterstützt wird. Werden zudem der Sammler und die Saugleitungen entweder direkt miteinander oder durch fischhautartige, dünnwandige Versteifungen miteinander fest verbunden, ergibt sich eine relativ leicht bauende und trotzdem sehr steife Sauganlage. Mit der im Anspruch 4 beschriebenen Beziehung zwischen der Höhe und der Breite bzw. Weite der in Frontalansicht einen U-Bogen bildenden Sauganlage werden in vorteilhafter Weise Elastizität und Steifigkeit bestimmt.

Die Elastizität wird vor allem über die zylinderkopfseitigen Leitungsteile der Saugleitungen erreicht, die nach einem Teilmerkmal des Anspruches 2 in zur Längsmittelebene der Maschine in parallelen Ebenen verlaufend angeordnet sind. Für eine vorteilhaft großflächig über dem V-Winkelraum der Brennkraftmaschine verteilte Anordnung der sammlerseitigen Leitungsteile der Saugleitungen dient nach einem Teilmerkmal des Anspruches 2 die diagonale Anordnung des langgestreckten Sammlers. Dies ergibt zwei zueinander entgegengesetzt verlaufende Gruppen von Saugleitungen, die in einem zum Sammler parallelen Verlauf so eng beabstandet werden können, daß sie nach einem Teilmerkmal des Anspruches 3 durch gemeinsame Wandabschnitte fest miteinander verbunden sind. Damit ist eine im Hinblick auf wechselnde Belastungsrichtungen aus Biege- und Torsions-Beanspruchungen gleichmäßig versteifende Sauganlage erzielt.

Durch die U-bogenförmige Ausgestaltung kann die Sauganlage vorteilhaft in Guß ausgeführt werden, wobei die fischhautartigen, dünnwandigen Versteifungen zwischen Leitungsteilen der Saugleitungen, den beabstandeten Krümmern der sammelseitigen Leitungsteile sowie zwischen dem Sammler und benachbarten Leitungsteilen etwa symmetrisch zur Trennfläche von Gießeinrichtungen angeordnet sind.

Die Erfindung ist anhand eines in der Zeichnung dargestellten Ausführungsbeispiels beschrieben. Es zeigen:

Fig. 1 eine Hubkolben-Brennkraftmaschine mit V-förmig angeordneten Zylinder-Reihen und einer die Zylinderköpfe U-bogenförmig verbindenden Sauganlage,

Fig. 2 den V-Motor nach Fig. 1 in Draufsicht mit diagonal angeordnetem Sammler der Sauganlage und

Fig. 3 einen Schnitt durch eine Gruppe von Saugleitungen gemäß der Linie III-III in Fig. 2.

Eine Hubkolben-Brennkraftmaschine 1 mit zwei einander gegenüberliegenden, V-förmig angeordneten Zylinder-Reihen 2 ist mit gesonderten Zylinderköpfen 3 ausgerüstet. Zwischen den Zylinderköpfen ·3 ist eine den V-Winkelraum 4 der Brennkraftmaschine 1 überdeckende Sauganlage 5 angeordnet, die einen Sammler 6 und Saugleitungen 7 und 8 umfaßt. Die Zylinder-Reihen 2 werden von einem Kurbelgehäuse-Oberteil 9 getragen, das mit einem Kurbelgehäuse-Unterteil 10 in Verbindung steht. Das Kurbelgehäuse-Unterteil 10 dient zur zusätzlichen Versteifung der Brennkraftmaschine 1 und weist hierfür eine nahe der Kontur der Pleuelgeige verlaufende, halbschalenartige Gehäusewand 11 auf, die einander gegenüberliegende äußere Gehäusewände 12 miteinander verbindet. Mit 13 ist eine die Brennkraftmaschine 1 nach unten abschließende Ölwanne bezeichnet.

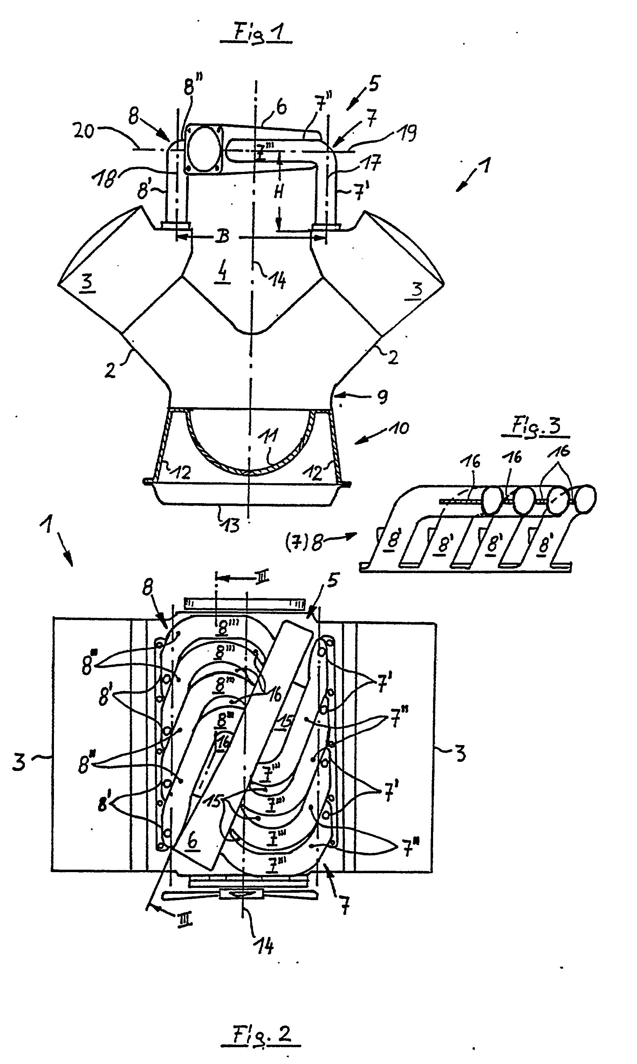

Die von der Brennkraftmaschine 1 gesondert ausgebildete Sauganlage 5 erstreckt sich - in Frontansicht der Maschine 1 gemäß Fig. 1 gesehen - zwischen den Zylinderköpfen 3 U-bogenförmig, wobei im Scheitelbereich des bogenförmigen Verlaufes der aus Fig. 2 ersichtliche, langgestreckte Sammler 6 angeordnet ist. Die Saugleitungen 7 und 8 der Sauganlage 5 umfassen jeweils ein zylinderseitiges Leitungsteil 7' und 8'. Die zylinderseitigen Leitungsteile 7' und 8' sind gemäß den Fig. 2 und 3 in Maschinenlängsrichtung etwa gleichgerichtet ansteigend angeordnet und verlaufen in zur Längsmittelebene 14 der Maschine 1 parallelen Ebenen 17,18. An diese schließen sich zur Längsmittelebene 14 der Brennkraftmaschine 1 unter einem spitzen Winkel etwa zueinander parallel verlaufende sammlerseitige Leitungsteile 7″ und 8″ an, die über Krümmer 7‴ und 8‴ mit dem Sammler 6 verbunden sind und in quer zur Längsmittelebene 14 gerichteten Ebenen 19,20 verlaufen. Wie aus der Draufsicht der Maschine 1 nach Fig. 2 näher hervorgeht, erstreckt sich der Sammler 6 diagonal über den V-Winkelraum 4 der Brennkraftmaschine 1.

Die zueinander parallel verlaufenden, sammlerseitigen Leitungsteile 7″ und 8″ sind durch geringfügige Überlappung durch gemeinsame Wandabschnitte fest verbunden. Dagegen sind der beiderseits zu benachbarten Leitungsteilen 7″ und 8″ beabstandete Sammler 6 sowie die untereinander beabstandeten Krümmer 7‴ und 8‴ durch fischhautartige, dünnwandige Versteifungen 15 und 16 miteinander fest verbunden. Die zylinderkopfseitigen Leitungsteile 7' und 8' können ebenfalls in der vorbeschriebenen Weise miteinander verbunden sein.

Elastizität und Steifigkeit der Sauganlage 5 werden bevorzugt dadurch aufeinander abgestimmt, daß das Höhenmaß H der in Frontansicht der Maschine 1 gesehenen Sauganlage 5 mit dem zwischen den zylinderkopfseitigen Anschlußstellen der Saugleitungen 7 und 8 festgelegten Breitenmaß B ein Verhältnis H/B bildet, für das ein Bereich von etwa 0,3 bis 0,6 gilt.

Die U- bzw. bogenförmige Gestaltung der Sauganlage 5 bietet sich für eine Herstellung als einstückiges Gußteil an.

Die U-förmige Sauganlage 5 ergibt über die Zylinderköpfe 3 und die Zylinder-Reihen 2 mit der halbschalenartigen Gehäusewand 11 des Kurbelgehäuse-Unterteiles 10 ein geschlossenes Profil, das bei einer dünnwandigen Brennkraftmaschine 1 mit hohem Niveau an Drehmoment und Leistung eine erhebliche Versteifung bewirkt, so daß insbesondere durch wechselnde Biege- und Torsions-Belastungen ausgelöste Geräuschabstrahlungen reduziert sind.

**Patentansprüche**

1. Hubkolben-Brennkraftmaschine mit zwei einander gegenüber angeordneten Zylinder-Reihen, insbesondere in V-Anordnung,
   - mit einer einen Sammler (6) und daran angeschlossene Saugleitungen (7, 8) umfassenden Sauganlage (5),
   - deren Saugleitungen gesonderte Zylinderköpfe (3) der Zylinder-Reihen (2) die Maschine (1) versteifend miteinander verbinden, und
   - wobei ferner ein die Zylinder-Reihen tragendes Kurbelgehäuse-Oberteil (9) wahlweise mit einem Kurbelgehäuse-Unterteil (10) verbindbar ist, dessen einander gegenüberliegende äußere Gehäusewände (12) die Maschine zusätzlich versteifend miteinander verbunden sind, dadurch gekennzeichnet,
   - daß eine - in Frontansicht der Maschine (1) gesehen - die Zylinderköpfe (3) im wesentlichen U-bogenförmig verbindende Sauganlage (5) mit einem Höhenmaß (H) des 0,3 bis 0,6fachen des zwischen den zylinderkopfseitigen Anschlußstellen der Saugleitungen (7, 8) festgelegten Breitenmaßes (B) vorgesehen ist, wobei
   - die zylinderkopfseitigen Leitungsteile (7', 8') der Saugleitungen (7, 8) einer Zylinder-Reihe (2) in Maschinenlängsrichtung etwa gleichgerichtet geneigt ansteigend angeordnet sind, und
   - in zur Längsmittelebene (14) der Maschine (1) unter einem spitzen Winkel etwa zueinander parallel verlaufende sammlerseitige Leitungsteile (7″, 8″) mit Krümmern (7‴, 8‴) zum Anschluß an den Sammler (6) übergehen, wobei die Saugleitungen (7, 8) bzw. die Leitungsteile (7″, 8″) bzw. die Krümmer (7‴, 8‴) zumindest abschnittsweise miteinander als auch die dem im wesentlichen über die Länge der Maschine (1) sich erstreckenden Sammler (6) benachbarten zusätzlich mit diesem verbunden sind.

2. Sauganlage nach Anspruch 1, dadurch gekennzeichnet, daß sich der Sammler (6) - in Draufsicht der Maschine (1) gesehen - diagonal über den V-Winkelraum (4) erstreckt, wobei
   - die zylinderkopfseitigen Leitungsteile (7', 8') der Saugleitungen (7, 8) jeweils in einer zur Längsmittelebene (14) der Maschine (1) im wesentlichen parallelen Ebene (17, 18) verlaufend angeordnet sind, und
- die sammlerseitigen Leitungsteile (7 ", 8 ") einschließlich der Krümmer (7 "', 8 "') jeweils in einer zur Längsmittelebene (14) quergerichteten Ebene (19, 20) den V-Winkelraum (4) der Maschine (1) überdeckend angeordnet sind.

3. Sauganlage nach Anspruch 1 und 2, dadurch gekennzeichnet,
- daß die zueinander parallel verlaufenden, sammlerseitigen Leitungsteile (7 ", 8 ") miteinander durch gemeinsame Wandabschnitte fest verbunden sind, und
- daß der Sammler (6) beiderseits zu benachbarten Leitungsteilen (7 ", 8,") sowie die Krümmer (7 "', 8,"') untereinander beabstandet angeordnet sind, wobei fischhautartige, dünnwandige Versteifungen (15, 16) die jeweiligen vorgenannten Bauteile miteinander fest verbinden.

4. Sauganlage nach den Ansprüchen 1 bis 3, gekennzeichnet durch eine Ausgestaltung als Gußteil.

5. Hubkolben-Brennkraftmaschine nach den Ansprüchen 1 bis 4, gekennzeichnet durch die Kombination mit einem Kurbelgehäuse-Unterteil (10), das eine nahe der Kontur der Pleuelgeige verlaufende, halbschalenartige Gehäusewand (11) aufweist.

## Claims

1. A reciprocating-piston internal combustion engine having two facing banks of cylinders, more particularly in a V arrangement,
- with an intake system (5) comprising a manifold (6) and intake pipes (7, 8) connected thereto,
- the intake pipes connecting separate heads (3) of the banks (2) of cylinders and reinforcing the engine (1), and
- a crankcase upper part (9) carrying the cylinder banks being optionally connectable to a crankcase lower part (10) having opposite outer walls (12) which are interconnected and additionally reinforce the engine, characterised in that
- an intake system (5) which, as seen from the front of the engine (1), is substantially U-shaped and connects the cylinder heads (3), is given a height (H) which is from 0.3 to 0.6 times the width (B) between the places where the intake pipes (7, 8) are connected to the cylinder head,
- the parts (7', 8') of the intake pipes (7, 8) connected to the heads of a bank of cylinders (2) are disposed so as to slope upwards at approximately the same direction in the longitudinal direction of the engine, and
- parts (7", 8") of the intake pipes near the manifold and extending approximately parallel to one another at an acute angle to the longitdunal central plane (14) of the engine (1) merge into bends (7"', 8"') for connecting to the manifold (6), and
- the intake pipes 7, 8, the pipe parts (7", 8") and the bends (7"', 8"') or at least portions thereof are connected to one another, and the pipes adjacent the manifold (6), which extends substantially along the length of the engine (1), are additionally connected to the manifold.

2. An intake system according to claim 1, characterised in that
- the manifold (6), as seen when the engine (1) is in plan view, extends diagonally over the V-space, - the parts (7', 8') of the intake pipes (7, 8) in a cylinder head are disposed in respective planes (17, 18) extending substantially parallel to the longitudinal central plane (14) of the engine (1), and
- the parts (7", 8") ending at the manifold, including the bends (7 "', 8 "'), are disposed in respective planes (19, 20) extending transversely to the longitudinal central plane (14) and overlap the V-space (4) of the engine (1).

3. An intake system according to claim 1 and 2, characterised in that
- the parts (7", 8") of the pipes ending in the manifold and extending parallel to one another are permanently interconnected by common wall portions, and
- the manifold (6) is spaced apart from the neighbouring parts (7", 8") on its two sides and the bends (7", 8"), and webbed thin-walled reinforcements (15, 16) permanently interconnect the aforementioned components.

4. An intake system according to claims 1 to 3, characterised in that it is constructed as a casting.

5. A reciprocating-piston internal combustion engine according to claims 1 to 4, characterised by combination with a crankcase bottom part (10) which has a semimonocoque-like wall (11) extending near the contour of the connecting rod.

## Revendications

1. Moteur à combustion interne à pistons alternatifs, avec deux rangées de cylindres disposées l'une en face de l'autre, notamment en V,
- avec un ensemble d'aspiration (5) comprenant un collecteur (6) et des canalisations d'aspiration (7, 8) qui y sont raccordées,
- ensemble dont les canalisations d'aspiration relient ensemble différentes têtes de cylindre (3) des rangées de cylindres (2), rendant ainsi le moteur plus rigide,
- une partie supérieure (9) du carter de vilebrequin, portant les rangées de cylindres, est en outre susceptible d'être reliée à volonté à une partie inférieure (10) du carter de vilebrequin, dont les parois externes (12), placées l'une en face de l'autre, sont reliées ensemble, rendant ainsi le moteur encore plus rigide,
moteur caractérisé en ce que :
- un ensemble d'aspiration (5) qui, en vue frontale du moteur (1), relie les têtes de cylindres (3) selon un arc essentiellement en forme de U, est prévu avec une cote en hauteur (H) qui représente 30% à 60% de la cote en largeur (B), déterminée entre les points de raccordement sur les têtes de cylindres des canalisations d'aspiration (7, 8);
- les parties ascendantes (7', 8'), côté têtes de cylindres, des canalisations d'aspiration (7, 8) d'une rangée de cylindres (2) sont inclinées à peu près parallèlement en direction longitudinale du moteur, - les parties (7 ", 8 "), côté collecteur, des canalisations d'aspiration (7, 8) s'étendant, à peu près parallèlement entre elles, sous un angle aigu vers le plan longitudinal médian (14) du moteur (1), se poursuivent par des coudes (7''', 8 '''), pour permettre leur raccordement au collecteur (6),

– les canalisations d'aspiration (7, 8), ou les parties (7", 8") de ces canalisations, ou bien les coudes (7''', 8"'), sont reliés entre eux, tout au moins par parties, et également leurs parties voisines du collecteur (6), qui s'étend essentiellement sur la longueur du moteur, sont en outre reliées à celui-ci.

2. Ensemble d'aspiration selon la revendication 1, caractérisé en ce que:

– le collecteur (6), en vue de dessus du moteur (1), s'étend diagonalement au-dessus de l'espace angulaire en V (4),

– les parties (7', 8'), côté têtes de cylindres, des canalisations d'aspiration (7, 8) s'étendent respectivement dans un plan (17, 18), essentiellement parallèle au plan médian longitudinal (14) du moteur (1),

– les parties (7", 8"), côté collecteur, des canalisations d'aspiration (7, 8), y compris les coudes (7''', 8'''), sont respectivement disposées dans un plan (19, 20) orienté transversalement par rapport au plan médian longitudinal (14) et recouvre l'espace angulaire en V (4) du moteur.

3. Ensemble d'aspiration selon la revendication 1 et la revendication 2, caractérisé en ce que:

– les parties (7", 8"), côté collecteur, s'étendant parallèlement les unes par rapport aux autres, des canalisations d'aspiration (7, 8), sont solidement reliées ensemble par des parties de paroi communes,

– le collecteur (6) se trouve des deux côtés à une certaine distance des parties de canalisations (7", 8") voisines, de même que les coudes (7''', 8 ''') se trouvent à une certaine distance les uns des autres, - des raidisseurs (15, 16), à paroi mince comme une peau de poisson, relient solidement entre eux les éléments constitutifs précités.

4. Ensemble d'aspiration selon les revendications 1 à 3, caractérisé en ce qu'il est réalisé sous la forme d'une pièce de fonderie.

5. Moteur à combustion interne à pistons alternatifs selon les revendications 1 à 4, caractérisé en ce qu'il est combiné avec une partie inférieure (10) de carter de vilebrequin, qui comporte une paroi de carter (11) en demi-coquille s'étendant au voisinage du contour de la tête de bielle.

Fig.1

Fig.3

Fig.2